# EUROPEAN PATENT APPLICATION

(11) **EP 2 757 286 A1**
(43) Date of publication of application: **23.07.2014**
(21) Application number: 13167662.9
(22) Date of filing: 14.05.2013
(51) Int. Cl.: F16H 1/36, F16H 1/28

(54) **Harmonic drive**

(30) Priority: 21.01.2013 TW 102102272
(71) Applicant: Harmonic Innovation Technology Co., Ltd., Taipei City 110 (TW)
(72) Inventor: Yeh, Chun-Shen, 110 Taipei (TW)
(74) Representative: Schwerbrock, Florian

(57) **Abstract**

A harmonic drive includes a housing (110), a first gear (120), a second gear (130), and a driving unit. The first gear (120) has a first number of teeth. The second gear (130) is fixed to the housing (110), and has a second number of teeth. The second number is different from the first number. The driving unit is configured to drive the first gear (120) to rotate when rotating. The driving unit includes a supporting base (142), and a plurality of third gears (144) affixed to the supporting base (142) in a rotatable manner, and each of the third gears (144) is engaged with the first gear (120) and the second gear (130).

## Description

### Background of the Invention

### 1. Field of the Invention

The present invention relates to a harmonic drive, and more particularly, to a rigid and easy to manufacture harmonic drive.

### 2. Description of the Prior Art

A harmonic drive is a deceleration device with a high reduction ratio. The conventional harmonic drive generally comprises a rigid gear, a flexible gear and a wave generator. The wave generator is coupled to a power source (such as a motor), and the flexible gear is coupled to a power output shaft for outputting power. A number of teeth of the rigid gear is different from a number of teeth of the flexible gear. The wave generator is configured to press the flexible gear to deform when rotating, in order to drive the teeth of the flexible gear to engage with the teeth of the rigid gear at different positions. Since the number of teeth of the rigid gear is different from the number of teeth of the flexible gear, the flexible gear is driven to slightly rotate when the wave generator keeps rotating. Generally, the reduction ratio of the harmonic drive is equal to a result of dividing the number of teeth of the rigid gear by a difference between the number of teeth of the rigid gear and the number of teeth of the flexible gear. When the rigid gear has more teeth and the difference between the number of teeth of the rigid gear and the number of teeth of the flexible gear is smaller, the reduction ratio of the harmonic drive is quite high.

However, the harmonic drive of the prior art is fragile since the flexible gear is made of softer material, and manufacturing processes of the flexible gear are complex and difficult. Moreover, in the harmonic drive of the prior art, the difference between the number of teeth of the rigid gear and the number of teeth of the flexible gear must be a multiple of 2, therefore, the reduction ratio of the harmonic drive of the prior art has less flexibility.

### Summary of the Invention

The present invention provides a harmonic drive comprising a housing, a first gear, a second gear, and a driving unit. The first gear has a first number of teeth. The second gear is fixed to the housing, and has a second number of teeth. The second number is different from the first number. The driving unit is configured to drive the first gear to rotate when rotating. The driving unit comprises a supporting base, and a plurality of third gears affixed to the supporting base in a rotatable manner, and each of the third gears is engaged with the first gear and the second gear.

In contrast to the prior art, the harmonic drive of the present invention utilizes rigid gears to achieve a high reduction ratio, therefore, the harmonic drive of the present invention has stronger rigidity and is invulnerable. In addition, manufacturing processes of the rigid gears are simpler, thus the harmonic drive of the present invention is easy to manufacture with high yield rate. Moreover, the difference between the number of teeth of the first gear and the number of teeth of the second gear can be an odd number or an even number. Therefore, the reduction ratio of the harmonic drive of the present invention has more flexibility.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is an exploded view diagram of a harmonic drive of a first embodiment of the present invention.
FIG. 2 is diagram showing an internal structure of the harmonic drive of FIG. 1.
FIG. 3 is an exploded view diagram of a harmonic drive of a second embodiment of the present invention.
FIG. 4 is diagram showing an internal structure of the harmonic drive of FIG. 3.

### Detailed Description

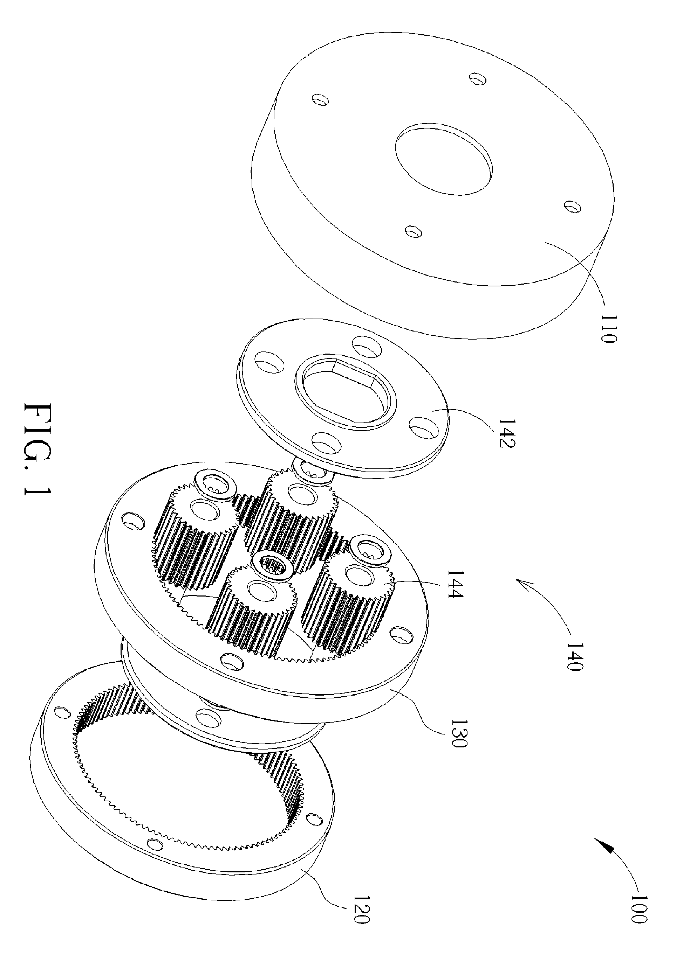

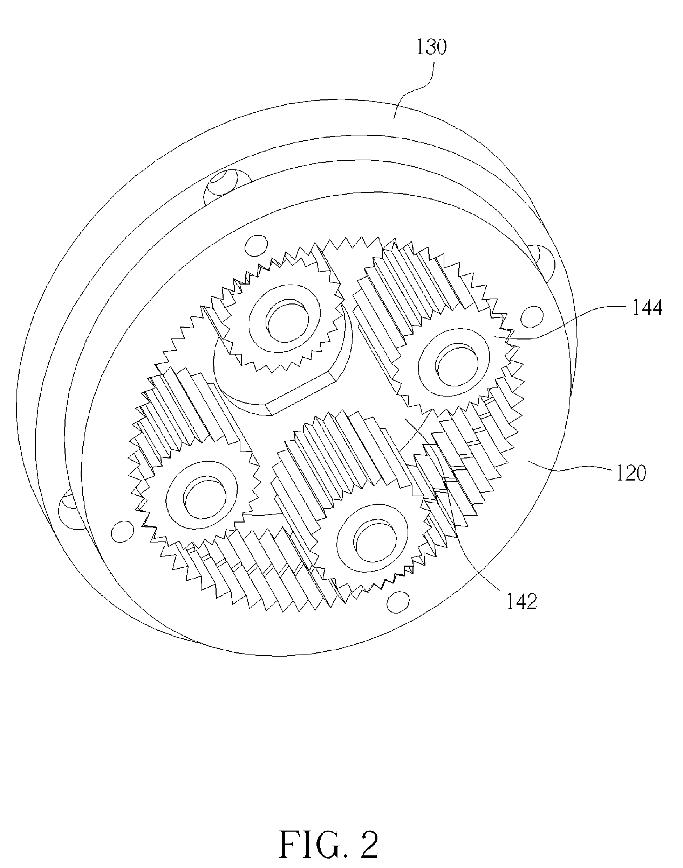

Please refer to FIG. 1 and FIG. 2 together. FIG. 1 is an exploded view diagram of a harmonic drive of a first embodiment of the present invention. FIG. 2 is a diagram showing an internal structure of the harmonic drive of FIG. 1. As shown in figures, the harmonic drive 100 of the present invention comprises a housing 110, a first gear 120, a second gear 130, and a driving unit 140. The first gear 120 has a first number of teeth. The second gear 130 is fixed to the housing 110, and has a second number of teeth. The second number is different from the first number. The driving unit 140 comprises a supporting base 142, and a plurality of third gears 144. The third gears 144 are affixed to the supporting base 142 in a rotatable manner, and each of the third gears 144 is engaged with the first gear 120 and the second gear 130 simultaneously.

In the first embodiment, the first gear 120 and the second gear 130 are internal gears, and the third gears 144 are external gears. A pitch circle diameter of the first gear 120 is equal to a pitch circle diameter of the second gear 130, and a centerline of the first gear 120 and a centerline of the second gear 130 are identical. Pitch circle diameters of the third gears 144 are smaller than the pitch circle diameters of the first gear 120 and the second gear 130. The first gear 120, the second gear 130 and the third gears 144 are rigid gears. The supporting base 142 can be coupled to a power source (such as a motor), and the first gear 120 can be coupled to a power output shaft for outputting power.

According to arrangement of the above embodiment, when the power source drives the supporting base 142 to rotate, engaged positions between the third gears 144 and the first and second gears 120, 130 are changed, and the first gear 120 is further driven to rotate the power output shaft for outputting power. For example, if a difference between the first number and the second number is 4, the third gears 144 are simultaneously engaged with the first gear 120 and the second gear 130 at positions separated by equal circumferential angles of 90 degrees. When the supporting base 142 is rotated, the third gears 144 rotate around inner sides of the first and second gears 120, 130, so as to change engaged positions between the third gears 144 and the first and second gears 120, 130. When the supporting base 142 makes one rotation, since the second gear 130 is fixed to the housing 110 without rotating, and the difference between the number of teeth of the first gear 120 and the number of teeth of the second gear 130 is 4, the first gear 120 is driven to rotate a circumferential angle of 4 teeth relative to the second gear 130. Therefore, a reduction ratio of the harmonic drive 100 is equal to a result of dividing the number of teeth of the first gear 120 by the difference between the number of teeth of the first gear 120 and the number of teeth of the second gear 130. When the first gear 120 has more teeth and the difference between the number of teeth of the first gear 120 and the number of teeth of the second gear 130 is smaller, the reduction ratio of the harmonic drive 100 of the present invention is quite high.

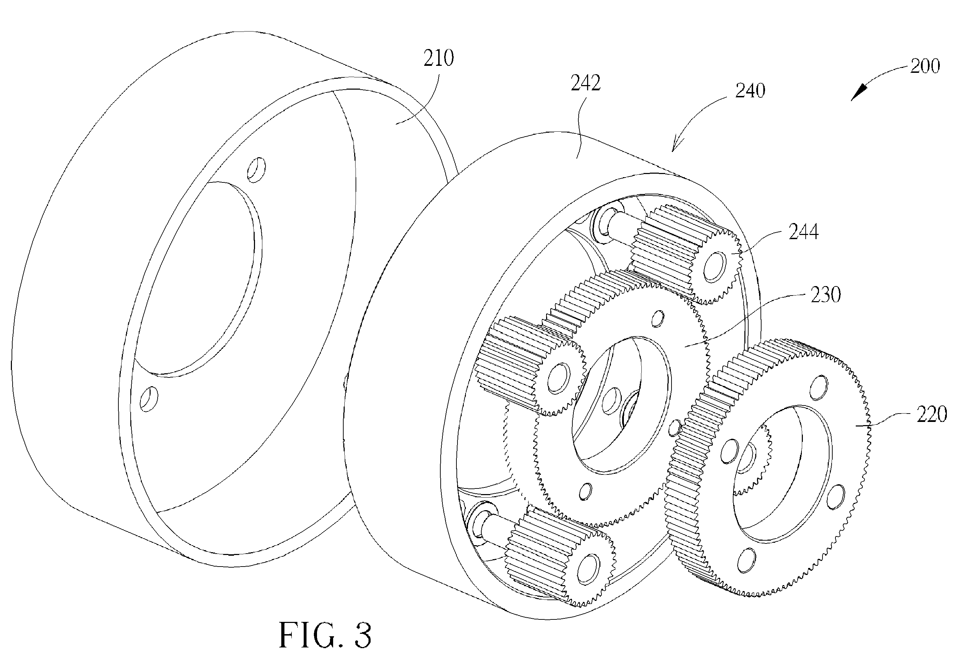

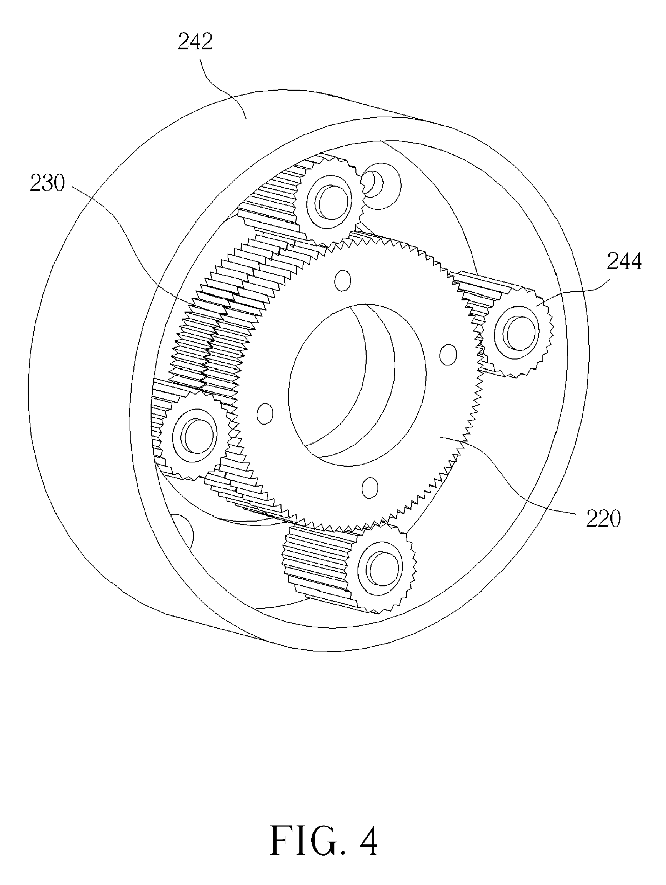

Please refer to FIG. 3 and FIG. 4 together. FIG. 3 is an exploded view diagram of a harmonic drive of a second embodiment of the present invention. FIG. 4 is diagram showing an internal structure of the harmonic drive of FIG. 3. As shown in figures, the harmonic drive 200 of the present invention comprises a housing 210, a first gear 220, a second gear 230, and a driving unit 240. The first gear 220 has a first number of teeth. The second gear 230 is fixed to the housing 210, and has a second number of teeth. The second number is different from the first number. The driving unit 240 comprises a supporting base 242, and a plurality of third gears 244. The third gears 244 are affixed to the supporting base 242 in a rotatable manner, and each of the third gears 244 is engaged with the first gear 220 and the second gear 230 simultaneously.

Different from the first embodiment, the first gear 220 and the second gear 230 of the second embodiment in the present invention are external gears. In addition, similarly, the third gears 244 are external gears. A pitch circle diameter of the first gear 220 is equal to a pitch circle diameter of the second gear 230, and a centerline of the first gear 220 and a centerline of the second gear 230 are identical. The first gear 220, the second gear 230 and the third gears 244 are rigid gears. The supporting base 242 can be coupled to a power source (such as a motor), and the first gear 220 can be coupled to a power output shaft for outputting power.

According to the arrangement of the above embodiment, when the power source drives the supporting base 242 to rotate, engaged positions between the third gears 244 and the first and second gears 220, 230 are changed, and the first gear 220 is further driven to rotate the power output shaft for outputting power. For example, if a difference between the first number and the second number is 4, the third gears 244 are simultaneously engaged with the first gear 220 and the second gear 230 at positions separated by equal circumferential angles of 90 degrees. When the supporting base 242 is rotated, the third gears 244 rotate around outer sides of the first and second gears 220, 230, so as to change engaged positions between the third gears 244 and the first and second gears 220, 230. When the supporting base 242 makes one rotation, since the second gear 230 is fixed to the housing 210 without rotating, and the difference between the number of teeth of the first gear 220 and the number of teeth of the second gear 230 is 4, the first gear 220 is driven to rotate a circumferential angle of 4 teeth relative to the second gear 230. Therefore, a reduction ratio of the harmonic drive 200 is also equal to a result of dividing the number of teeth of the first gear 220 by the difference between the number of teeth of the first gear 220 and the number of teeth of the second gear 230. When the first gear 220 has more teeth and the difference between the number of teeth of the first gear 220 and the number of teeth of the second gear 230 is smaller, the reduction ratio of the harmonic drive 200 of the present invention is quite high.

In the embodiments of the present invention, the difference between the first number and the second number can be at least equal to 2, and the difference between the first number and the second number can be an odd number or an even number. A number of the third gears can be equal to or smaller than the difference between the first number and the second number, the third gears are separated by equal circumferential angles. For example, when the difference between the first number and the second number is 3, the harmonic drive of the present invention utilizes three third gears to drive the first gear to rotate, and the three third gears are engaged with the first and second gears at positions separated by equal circumferential angles of 120 degrees.

In contrast to the prior art, the harmonic drive of the present invention utilizes rigid gears to achieve a high reduction ratio, therefore, the harmonic drive of the present invention is stronger and invulnerable. In addition, manufacturing processes of the rigid gears are simpler, thus the harmonic drive of the present invention is easy to manufacture with high yield rate. Moreover, a difference between a number of teeth of the first gear and a number of teeth of the second gear can be an odd number or an even number, therefore, the reduction ratio of the harmonic drive of the present invention has more flexibility.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A harmonic drive, comprising:
a housing;
a first gear, having a first number of teeth;
a second gear, fixed to the housing, the second gear having a
second number of teeth, wherein the second number is different from the first number; and
a driving unit, configured to drive the first gear to rotate
when rotating, the driving unit comprising:
a supporting base; and
a plurality of third gears, affixed to the supporting base
in a rotatable manner, each of the third gears being engaged with the first gear and the second gear.

2. The harmonic drive of claim 1, wherein the first gear and the second gear are external gears.

3. The harmonic drive of claim 1, wherein the first gear and the second gear are internal gears.

4. The harmonic drive of claim 1, wherein the plurality of third gears are separated by equal circumferential angles.

5. The harmonic drive of claim 1, wherein pitch circle diameters of the third gears are smaller than pitch circle diameters of the first gear and the second gear.

6. The harmonic drive of claim 1, wherein a pitch circle diameter of the first gear is equal to a pitch circle diameter of the second gear.

7. The harmonic drive of claim 1, wherein a centerline of the first gear and a centerline of the second gear are identical.

8. The harmonic drive of claim 1, wherein the first gear, the second gear and the third gears are rigid gears.
